# EUROPEAN PATENT SPECIFICATION

(11) **EP 3 744 540 B1**
(45) Date of publication and mention of the grant of the patent: **01.12.2021**
(21) Application number: 20185154.0
(22) Date of filing: 19.04.2017
(51) Int. Cl.: B60C 11/11, B60C 11/13, B60C 11/03

(54) **TYRE FOR MOTORCYCLE WHEELS**
REIFEN FÜR MOTORRADRÄDER
PNEU POUR ROUES DE MOTOCYCLETTE

(30) Priority: 27.04.2016 IT UA20162926
(43) Date of publication of application: 02.12.2020
(62) Divisional of application: 17724109.8
(73) Proprietor: Pirelli Tyre S.p.A., 20126 Milano (IT)
(72) Inventor: SCHIAVOLIN, Andrea, 20126 Milano (IT); MISANI, Pierangelo, 20126 Milano (IT)
(74) Representative: Fabiano, Piero

(56) References cited:
- EP-A1- 1 923 235
- EP-A1- 3 047 981
- JP-A- 2005 199 927
- JP-A- 2008 105 581
- JP-U- S5 845 103
- US-A- 4 617 976

## Description

### Field of the invention

The present invention relates to tyres for motorcycle wheels and particularly to tyres for motorcycle wheels for off-road use.

### Prior art

Typically, by the expression off-road tyres a range of tyres is meant which is intended to be fitted to motorcycles mainly used for driving off-road, comprising motorcycles having any engine capacity, from small-medium engine capacities (e.g. from 50 cm³ to 450 cm³) and/or medium power (e.g. 15-60 hp) to large engine capacities (e.g. 800 cm³) and/or high power (e.g. 70-100 hp). Off-road driving specialties are practiced on terrains characterized by different grounds, such as unevennesses of a dirt track, sand in competitions on beaches, slippery and/or rocky grounds and climbs on paths of a Enduro race.

Tyres intended to be fitted to motorcycles for off-road use are thus typically used in extreme conditions, on extremely varied terrains, different form asphalt: muddy terrain, sandy terrain, rocky terrain, compact terrain, soft terrain, etc. Besides grip, stability and traction on such different terrains, these tyres shall ensure optimal performance in terms of lifespan, wear, fatigue and tear strength.

Tyres for off-road motorcycles are for example described in patent application EP2529954, EP3047981, WO2015/056574, JPS5845103, JP2005199927 and in patent application WO2011001272 to the Applicant.

### Summary of the invention

Typically, in this product segment so called "knobby" tyres are used, i.e. tyres provided with projections (blocks) suitable for clawing at the terrain for ensuring grip, traction and lateral roadholding during maneuvers.

The Applicant has in fact observed that for off-road use in areas characterized by soft and muddy terrains, tyres are generally used which are provided with high blocks spaced apart from one another so as to deeply penetrate the terrain, for ensuring traction and easily draining mud and slush trapped between adjacent blocks.

However, the Applicant has also observed that tyres provided with this kind of blocks decay on hard terrains, where rocks and stones easily break the blocks, which are excessively mobile and not close enough to one another so as to cooperate with one another for distributing the stresses.

Moreover, the Applicant has observed that a typical problem of the tyres having high and mobile blocks is the gradual performance decay due to wear and fatigue.

The Applicant has observed that in the case of high blocks, since the stresses to which the blocks are subjected at their base increase due to a "lever effect", the probability of triggering tears and wear cracks, both typical indications of decay due to fatigue, increases as well.

The Applicant has also observed that the higher and more spaced apart are the blocks, the greater their mobility and therefore their rubbing relative to the terrain, which causes rapid wear due to abrasion.

The Applicant has thus felt the need to provide a tyre, particularly a tyre intended to be fitted to motorcycles for off-road use, having good grip, traction and lateral roadholding features on varied terrains, and allowing nevertheless the tyre service life to be increased and the probability of triggering tears and wear cracks due to an excessive mobility of the blocks to be reduced.

The Applicant has found that such need can be satisfied by means of a tyre, particularly a tyre intended to be fitted to wheels of motorcycles for off-road use, having a high void-to-rubber ratio and formed with high blocks spaced apart from one another, which are separated from one another by a plurality of tread band bottom portions and reinforcing elements substantially surrounding the bases of the blocks, thus reducing the mobility and free height thereof.

In a first aspect thereof, the invention relates to a motorcycle tyre, having a tread band comprising:
- a plurality of bottom surface portions;
- a plurality of blocks having a respective perimeter, spaced apart from one another so as to define a tread pattern with a void-to-rubber ratio higher than or equal to 50%;
- a plurality of reinforcing elements radially extending from the bottom surface portions, so as to join said blocks, up to a height lower than that of the blocks, and surrounding the blocks on at least 60% of their perimeter;
   wherein the portions of the plurality of bottom surface portions have an overall extension greater than 20% of an extension of the tread band;
- the reinforcing elements have a height which is higher in the central region of the tread band than in the lateral regions.

The Applicant has made a tyre having a tread band with blocks and provided with reinforcing elements joined to the blocks at the lateral surface thereof. The reinforcing elements surround, preferably totally, the blocks to which they are joined, so as to reduce the mobility of the blocks and to strengthen the region thereof which is more subjected to the triggering of tears and wear cracks.

According to the Applicant, in fact, the presence of a reinforcing element surrounding the base of the block results in a reduction in intensity of the stresses which, being cyclically applied to the base of the block, dangerously cause cracks, tears, or breakings in the block itself.

Generally speaking, the Applicant believes that the presence of the reinforcing element "virtually" reduces the height of the blocks and thus the length of the lever, or lever arm, of the forces applied at the top of the block. In the Applicant's view, this reduction results, on the one hand, in a different application point of the stress, and on the other hand in a reduction in intensity of the same, caused by a reduction of one of its components.

At the same time, the significant overall extension of the bottom surface portions, i.e. the portions not covered by tread band projecting portions, such as blocks, reinforcing elements, or links, allows the blocks to carry out their traction action and their mobility not to be excessively constrained.

For the purposes of the present invention, angular measurements, and/or linear quantities (distances, widths, lengths, etc.), and/or surface areas are to be intended as referred to the tread pattern as defined above.

By "motorcycle tyre" it is meant a tyre having a high curvature ratio (typically greater than 0.20), which allows high camber angles to be reached when the motorcycle runs on a bend.

By "equatorial plane" of the tyre it is meant a plane perpendicular to the rotation axis of the tyre and dividing the tyre into two equal portions.

By "circumferential" direction it is meant a direction generically directed according to the rotation direction of the tyre, or in any case only slightly inclined relative to the rotation direction of the tyre.

By "axial" direction or "axially" it is meant a direction parallel to, or in any case only slightly inclined relative to the rotation axis of the tyre. By "radial" direction or "radially" it is meant a direction generically directed away from the rotation axis of the tyre.

By "void-to-rubber ratio" it is meant the 1's complement of the ratio between the sum of the top surface areas of the blocks of a determined portion of the tread pattern of the tyre (possibly of the whole tread pattern) and the total surface area of the same portion of the tread pattern (possibly of the whole tread pattern).

By top surfaces of the blocks the radially outer surfaces delimited by the radially outer corners of the blocks are meant.

By "tread pattern" it is meant the representation of each point of the tread band on a plane perpendicular to the equatorial plane of the tyre and tangent to the maximum diameter of the tyre. Angular measurements, and/or linear quantities (distances, widths, lengths, etc.), and/or surface areas are to be intended as referred to the tread pattern as defined above. In particular, by "width of the tread band" it is meant the width of the development of the tread band itself on said plane, measured between the axially outer corners of the axially outermost blocks.

By "extension of the tread band" it is meant the extension of the development of the tread band itself on said plane.

By "overall extension of the bottom surface portions" it is meant the extension of the tread band which is not covered by projecting portions. In particular, by such expression it is meant the extension of the tread band that is not covered by blocks, reinforcing elements, links or projecting elements of other kind.

By "top surface of the reinforcing element substantially parallel to the bottom surface of the tread band" it is meant that the inclination between said surfaces is equal to or smaller than 20°.

By "curvature ratio" of the tyre it is meant the ratio between the distance of the radially highest point of the tread band from the maximum cross section width (also called maximum chord) of the tyre, and the same maximum width of the tyre, in a cross section of the tyre.

By "maximum cross section width" (or maximum chord) it is meant the maximum width of the tyre profile, in other words the length of the segment whose ends are the axially outermost points of the tread profile.

By "continuous reinforcing element" it is meant a reinforcing element extending without interruptions around the block to which it is joined, or having only small discontinuities, covering less than 5% of the overall extension of the reinforcing element itself around the block.

The present invention, in one or more preferred aspects thereof, may comprise one or more of the features hereinafter presented.

Preferably, the blocks of said plurality of blocks have a height relative to the bottom surface of at least 7 mm.

Preferably, the reinforcing element may surround the block on at least 90% of its perimeter.

Preferably, the reinforcing element may surround the block continuously. Advantageously, the portions of the plurality of bottom surface portions have an overall extension greater than 30% of the extension of the tread band.

Conveniently, the reinforcing element may have a height lower than 60% of the height of the block.

Preferably, the reinforcing element may have a height higher than 5% of the height of the block.

Conveniently, the reinforcing element may have a height higher than 1 mm.

Advantageously, the reinforcing element may be tapered towards the block when moving radially away from the bottom surface. In this case the reinforcing element has in a plan view a width which decreases moving radially away from the bottom surface. Preferably, the reinforcing element may have a width of at least 2 mm.

Conveniently, the reinforcing element may have a width smaller than 8 mm.

Preferably, the reinforcing element in a plan view around the block may have segments of a constant width.

Conveniently, the reinforcing element may have a top surface substantially parallel to the bottom surface.

Preferably, all blocks of the tread band are joined to respective reinforcing elements. Advantageously, the reinforcing elements of adjacent blocks may be connected to one another.

Conveniently, the reinforcing elements of adjacent blocks may be connected to one another so as to form a reinforcing grid extending over the entire tread band. Preferably, the blocks may have a section radially tapered towards the outside. Advantageously, the blocks may have radially a section reduction towards the outside smaller than 30%.

Conveniently, in section the blocks may have a minimum circumferential dimension and a minimum axial dimension such that their ratio is higher than or equal to 0.4. Preferably, in a plan view the blocks may have a minimum circumferential dimension and a minimum axial dimension such that their ratio is lower than or equal to 2.

### Brief description of the drawings

Further features and advantages of the invention shall become clearer from the detailed description of some preferred, although not exclusive, embodiments of a motorcycle tyre according to the present invention.

Such description shall be made hereafter with reference to the accompanying drawings, provided only for indicating, and thus non-limiting, purposes, wherein:
- figure 1 shows a perspective view of a first example of a tyre according to the invention;
- figure 2 is a radial sectional view of the tyre of figure 1;
- figure 3 is a schematic plan view of a portion of the tread band of the tyre of figure 1;
- figure 4 is a schematic view of a portion of the tread band of the tyre of figure 1;
- figure 5 is a schematic enlarged view of a central portion of the tread band of the tyre of figure 1 with the reinforcing element partially in section; and
- figure 6 is a schematic sectional view of a tread band portion laid down on a plane perpendicular to the equatorial plane.

### Detailed description of embodiments of the invention

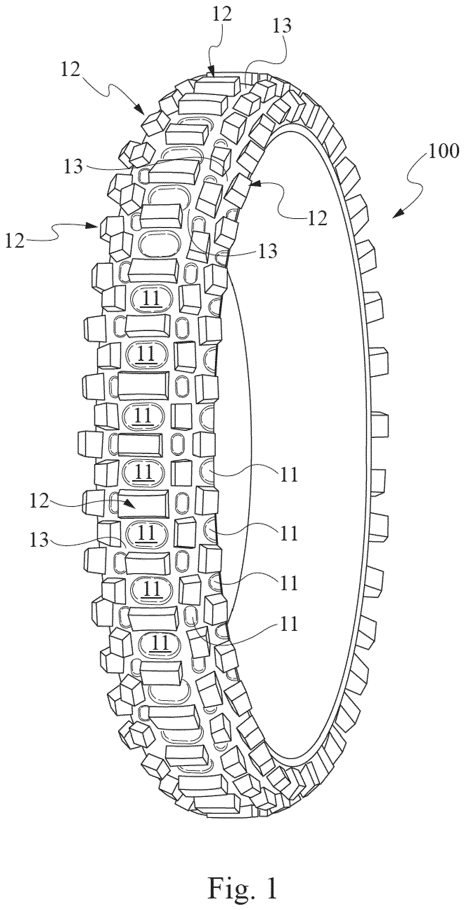

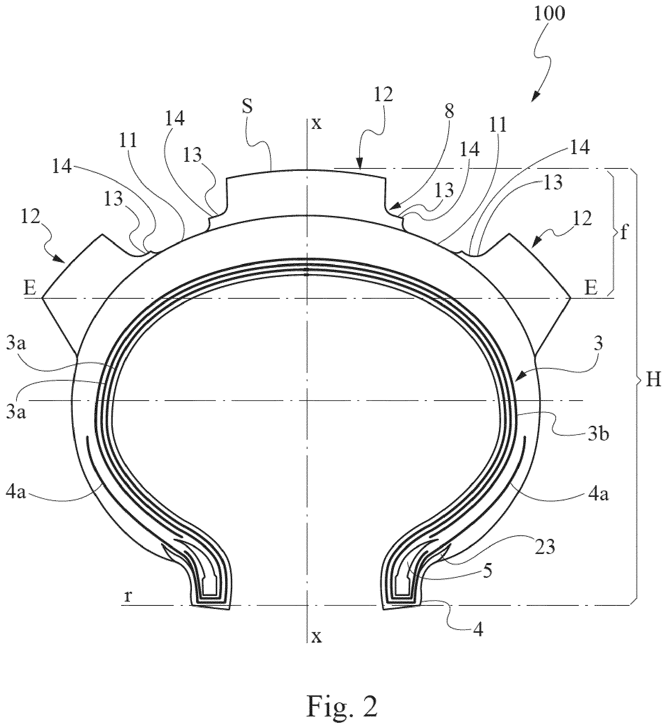

In figures 1-2 a tyre for motorcycle wheels according to the present invention is generally indicated at 100. In particular, the tyre shown in figures 1 and 2 is a tyre preferably intended to be fitted to a rear wheel of a motorcycle for off-road use having medium engine capacity, e.g. 450 cm³.

The tyre 100 has a section height H measured, at the equatorial plane X-X, between the top of the tread band and the fitting diameter, identified by the reference line r, passing through the tyre beads.

The tyre 100 further has a maximum width (or chord) C defined by the distance of the axially outermost points of the tyre itself. In the example shown in Figure 2, the width C is defined by the distance between the laterally opposite ends E of the tread itself.

The tyre has a curvature defined by the specific value of the ratio between the distance f of the top of the outer profile of the tread from the line passing through the axial ends E of the tread itself, measured at the equatorial plane of the tyre, and the aforesaid maximum width C. The axial ends E of the tread may be formed by a corner.

The tyres for motorcycles suitable for off-road use do not have particularly high curvature. Typically, the curvature ratio f/C for this kind of tyres is smaller or equal to about 0.3.

As far as the sidewalls are concerned, the invention preferably applies to tyres with relatively high sidewalls (fig. 1). Typically, for this kind of tyres the sidewall height ratio (H-f)/H is equal to at least about 0.5.

The motorcycle tyre 100 shown in figures 1 and 2, comprises a reinforcing structure comprising a carcass structure 3 formed by at least one carcass ply 3a. The carcass structure 3 comprises a crown portion and two axially opposite lateral portions. Each lateral portion is associated with a respective bead portion, described below.

The carcass structure 3 may be formed by at least two radially superimposed carcass plies 3a.

Each ply essentially consists of a sheet of elastomeric material incorporating a plurality of reinforcing cords.

Advantageously, such reinforcing cords are essentially parallel to one another within each ply and oriented according to directions which are inclined relative to the equatorial plane X-X of the tyre 100 and opposite to the cords of the radially adjacent ply.

The reinforcing cords of the carcass ply may be made from textile fibers, e.g. nylon, rayon or PEN fibers. At least some of the carcass plies are engaged, by means of opposite circumferential edges thereof, with at least one annular reinforcing structure in the bead region of the tyre 100.

In particular, the opposite lateral edge of two carcass plies are turned up about annular reinforcing structures called bead rings 4.

A tapered elastomeric filling 5 taking up the space formed by the turn-up 4a of the plies 3a is applied onto the radially outer perimeter edge of the bead rings 4.

The tyre region comprising the bead ring 4 and the filling 5 forms the so-called bead, intended for anchoring the tyre to a respective fitting rim, not shown.

In an alternative embodiment, not shown, the carcass ply has its opposite lateral edges interposed without a turn-up with a plurality of annular reinforcing structures arranged axially side by side to one another, each provided with rows of annular windings radially superimposed to one another. A filling of elastomeric material may be arranged between the rows of annular windings which are arranged axially side by side to one another. Moreover, the bead region comprises a strip 23 of abrasion-resistant elastomeric material, in an axially outer position relative to the turned-up lateral edges of the carcass plies. The carcass structure may further comprise, in a radial outer position, a reinforcing layer 3b, made from a sheet of elastomeric material incorporating a plurality of reinforcing cords.

Such a reinforcing layer may cover the carcass structure up to the sidewalls or extend up to the beads. The reinforcing layer may extend up to the turn-up 4a and may have its ends enclosed by the turn-up or located outside the same.

Such a reinforcing layer may comprise cords made from textile fibers as described above, arranged parallel to one another within the layer and oriented according to directions inclined relative to the equatorial plane X-X of the tyre 100.

In motorcycle tyres for particularly demanding uses, such as off-road rallies, the reinforcing layer may be complemented with or replaced by a belt layer so-called at zero degrees (not shown), formed by textile or metallic cords incorporated into an elastomeric matrix and arranged according to a direction substantially parallel to the equatorial plane. A tread band 8 is circumferentially applied, in a radially outer position, on the carcass structure 3. Blocks, separated from one another and arranged so as to define a desired tread pattern, are typically formed on the tread band 8 further to a molding operation carried out at the same time with the vulcanization of the tyre.

The tyre 100 comprises a pair of sidewalls laterally applied on opposite sides to said carcass structure 3.

The carcass structure 3 is further typically lined on its inner walls with a sealing layer, or so-called "liner", essentially consisting of a layer of an airtight elastomeric material, adapted to ensure the tight seal of the tyre itself after it has been inflated.

Preferably, the composition of the tread band 8 is such that the band has on its radially outer surface only one compound.

The tread band 8 comprises a plurality of bottom surface portions 11 and a plurality of blocks 12.

The bottom surface portions 11 are not covered by projecting tread band portions, such as blocks, reinforcing elements, or links, and have an overall extension greater than 20% of the extension of the tread band 8.

Advantageously, the bottom surface portions 11 may have an overall extension greater than 30% of the extension of the tread band 8.

Each block 12 has a top S. At least 80% of the blocks 12, preferably each block 12, has a height between its top S and a bottom surface 11 equal to at least 7 mm.

Preferably, each block 12 has a height T (not necessarily constant) comprised in the range of between 8 mm and 20 mm, preferably between 9 mm and 17 mm.

According to a preferred embodiment of the present invention, an example of which is also visible in figures 1, 3 and 4, the blocks 12, preferably all of them, are mutually spaced apart.

Preferably, each block 12 has a distance from an adjacent block 12 comprised in the range of between 20 and 50 mm.

The blocks 12 are mutually spaced apart and arranged so as to define a tread pattern characterized by a high void-to-rubber ratio, preferably higher than 50%, more preferably higher than 60%, more preferably equal to or lower than 85%.

A high void-to-rubber ratio, combined with a substantial height of the blocks and a substantial extension of bottom surface portions, results in a good grip and traction of the tyre on rough or soft terrains, such as sandy or muddy terrains.

On the other hand, the blocks 12 have a large section substantially along their entire radial extension, for withstanding the high torsions to which they are subjected, and thus avoiding to be torn off, on hard terrains, such as dirt or stony roads, or asphalt.

The blocks 12 may have a variable section in radial direction, in particular the blocks 12 are tapered, i.e. have a section which radially decreases towards the outside. Such a section reduction, however, is preferably lower than 30%. In other words, the surface area of the block 12 at its top is at most 30% smaller than the section of the same block 12 measured at the bottom surface 11.

Still for withstanding the strong torsional stresses to which they are subjected, the blocks 12 have a substantially compact shape. Preferably, to this end, the blocks 12 of the tread band 8 have in section a minimum circumferential dimension Wc and a minimum axial dimension Wl such that Wc/Wl is higher than or equal to 0.4.

Preferably, the blocks 12 of the tread band 8 have in section a minimum circumferential dimension Wc and a minimum axial dimension Wl such that Wc/Wl is lower than or equal to 2.

For at least one block 12 of the plurality of blocks the tread band 8 comprises a reinforcing element 13 extending radially from the bottom surface 11.

Preferably, the reinforcing element 13 extends radially by a height t lower than that of the block 12.

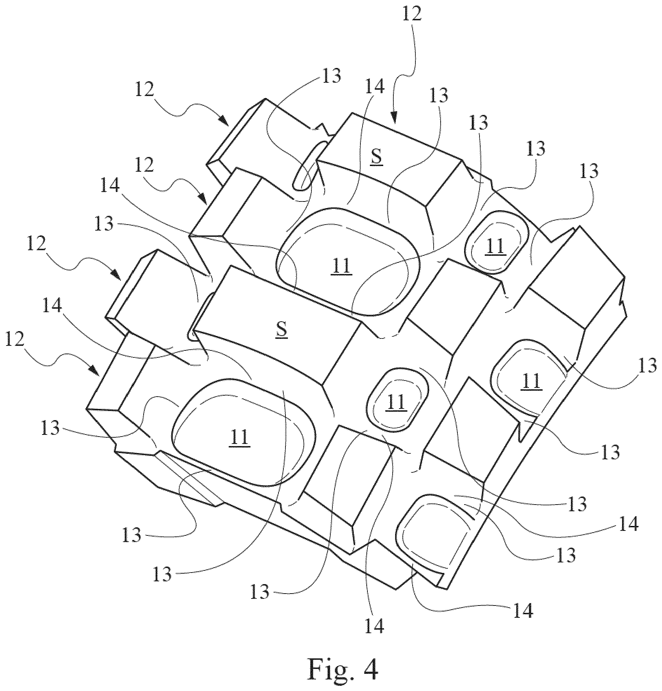

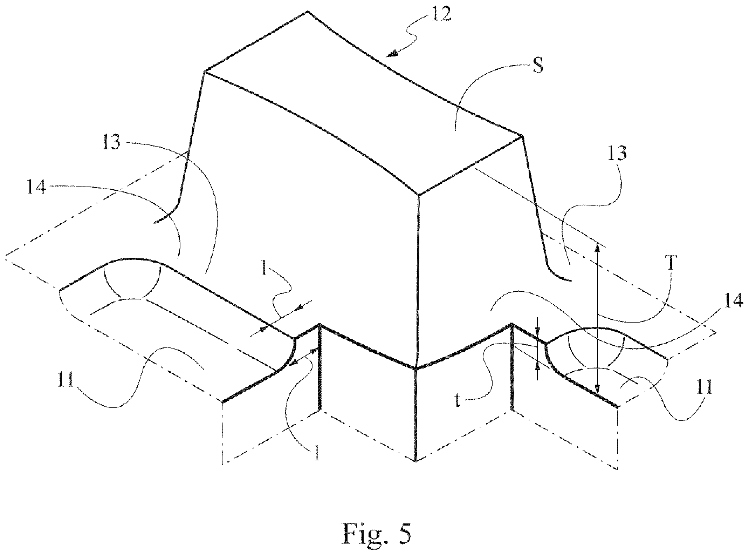

Advantageously, as it can be seen also in figures 4 and 5, the reinforcing element has a height t measured from the bottom surface 11 higher than 5% of the height T of the block 12.

For not limiting too much the mobility of the block 12, the reinforcing element has a height t lower than 60% of the height T of the block 12, for example a height equal to 25% of the height T of the block 12.

The reinforcing element 13 surrounds the block 12 on at least 70% of its perimeter. Preferably, the reinforcing element 13 surrounds the block on at least 90% of its perimeter.

The reinforcing element 13 surrounds the block 12 substantially continuously.

The reinforcing element 13 has a height t higher than 1 mm, preferably higher than 2 mm. The height t of the reinforcing element 13 may be not constant, rather it may increase such that the reinforcing elements 13 have a higher height t in the central region of the tread band 8 than in the lateral regions.

In the embodiment shown in figures 1, 2 and 3, described in more detail below and formed by many blocks 12 provided with the reinforcing element 13, the height t of the reinforcing element 13 increases also between a block 12 and the adjacent one.

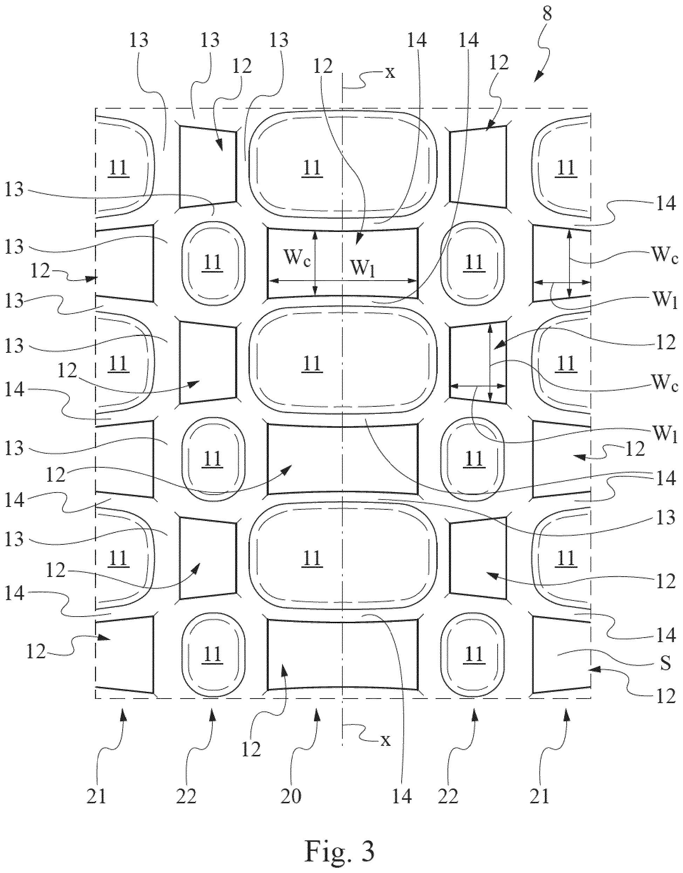

According to this embodiment, the reinforcing elements 13 have a lower height at the blocks located on the tyre shoulder, and a higher height t at the equatorial plane X-X and at the block 12 located across the latter. Preferably, the reinforcing element 13 has a top surface 14, joining the lateral wall of the block 12, substantially parallel to the bottom surface 11. In the embodiment shown in figures 1 and 3, the top surface 14 has in a plan view about the block 12 the same extension as the reinforcing element 13.

The top surface 14 is substantially parallel to the bottom surface 11.

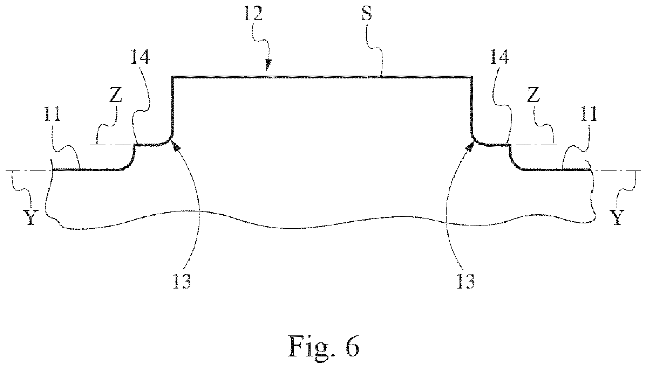

For visually noticing the parallel arrangement between the top surface 14 of the reinforcing element 12 and the bottom surface portions 11, it is possible, as shown in figure 6, to lay down a portion of the tread band 8 on a plane orthogonal to the equatorial plane X-X.

In this laid down configuration of the tread band 8 it is possible to readily recognize visually the parallel arrangement between the top surface 14 and the bottom surface portions 11 or, more particularly, between the laying plane Z-Z of the top surface and the laying plane Y-Y of the bottom surface portions 11.

The reinforcing element 13 further has a width 1 greater than 2 mm, preferably greater than 3 mm.

As a first approximation, the width 1 of the reinforcing element 13 may be measured at the top surface of the reinforcing element 13.

In the embodiment shown in the figures, the width 1 of the reinforcing element 13 radially decreases towards the outside. In other words, the reinforcing element 13 is radially tapered towards the outside.

Furthermore, considering planes substantially parallel to the laying plane Y-Y of the bottom surface portions 11, located at different heights and intersecting the reinforcing element 13 and the block 12, it may be noticed, on each one of such planes, that the width of the reinforcing element 13 varies also around the perimeter of the block 12.

In particular, the reinforcing element 13 has, for example at the top surface 14, segments having a constant width, usually located at sides of the block 12, and joining segments, usually located at corners of the blocks, in which the width of the reinforcing element 13 progressively increases.

According to some embodiments of the invention, such as that shown in figures 1 and 3, in which there are many blocks 12 provided with reinforcing elements 13, the latter are connected by links.

Such links substantially extend a reinforcing element 13 joined to a block 12 up to reaching the reinforcing element 13 joined to an adjacent block 12.

In particular, in the embodiment shown in figures 1 and 3, all reinforcing elements 13 are connected to one another by means of links, so as to form a reinforcing grid extending over the entire tread band 8.

In another embodiment, not shown, only some reinforcing elements 13 are connected to one another by means of links, forming localized grids extending over only some portions of the tread band 8.

In figures 1 and 3 it is shown, only as an example, an embodiment of the invention in which the tread band 8 comprises rows of blocks 20, 21, 22 axially spaced apart from one another, in each row of blocks each block 12 being spaced apart from the circumferentially adjacent block for easily draining mud and slush.

According to this embodiment, the blocks 12 are spaced apart so as to define a void-to-rubber ratio higher than 55%, preferably higher than 60%, for example equal to about 75%.

Preferably, according to this embodiment, the tread band 8 has five rows of blocks 12.

In particular, a central row 20 of blocks, located across the equatorial plane X-X, two lateral rows 21 of blocks, mutually opposite relative to the equatorial plane X-X and located at the shoulder of the tyre 100, and two intermediate rows 22 of blocks, each located between one lateral row 21 of blocks and the central row 20 of blocks.

For obtaining a uniform distribution of the blocks 12 on the tread band 8, and thus a predictable behavior of the tyre in different maneuvers, preferably, according to this embodiment, the blocks 12 of adjacent rows are circumferentially staggered.

Preferably, the block 12 of the central row 20 of blocks has a substantially rectangular shape, with Wl greater than Wc; according to this embodiment Wl is equal to about 2Wc. The blocks of the lateral rows 21 and of the intermediate rows 22 can be substantially inscribed in a circumference having a diameter greater than or equal to Wc.

According to this embodiment, all blocks 12 of the tread band 8 have a reinforcing element 13 which extends radially from the bottom surface portions 11 and surrounds the block on at least 70% of its perimeter.

Furthermore, according to this embodiment, the reinforcing element 13 surrounds the block 12 around its perimeter continuously.

In particular, the reinforcing elements 13 of the lateral rows 21 of blocks surrounds the blocks on about 75%-85% of their perimeter, whereas the reinforcing elements 13 of the intermediate rows 22 and of the central row 20 of blocks surround the blocks 12 completely, i.e. on 100% of their perimeter.

According to this embodiment, the reinforcing elements 13 have a height t equal to about 1 mm at the lateral rows 21 of blocks 12, and a height t equal to about 4 mm at the equatorial plane X-X and of the block 12 located across the latter.

All reinforcing elements 13 are connected to one another so as to form a grid extending on the whole tread band 8 from one shoulder to the other.

The present invention has been described with reference to some embodiments thereof. Many modifications can be made in the embodiments described in detail, still remaining within the scope of protection of the invention, defined by the following claims.

## Claims

1. Motorcycle tyre (100), having a tread band (8) comprising:
- a plurality of bottom surface portions (11);
- a plurality of blocks (12) having a respective perimeter, spaced apart from one another so as to define a tread pattern with a void-to-rubber ratio higher than or equal to 50%;
- a plurality of reinforcing elements (13) radially extending from said bottom surface portions (11), so as to join said blocks (12), up to a height (t) lower than that of said blocks (12) and surrounding said blocks on at least 60% of their perimeter;
the portions (11) of said plurality of bottom surface portions have an overall extension greater than 20% of an extension of said tread band (8);
**characterized in that**
- the reinforcing elements (13) have a height (t) which is higher in the central region of the tread band than in the lateral regions.

2. Motorcycle tyre (100) according to claim 1, **characterized in that** the blocks of said plurality of blocks (12) have a height T relative to the bottom surface of at least 7 mm.

3. Motorcycle tyre (100) according to claim 1, **characterized in that** said reinforcing element (13) surrounds said block (12) on at least 90% of its perimeter.

4. Motorcycle tyre (100) according to claim 1, **characterized in that** said reinforcing element (13) has a height (t) lower than 60% of the height (T) of the block (12).

5. Motorcycle tyre (100) according to any one of the previous claims 1 to 4, **characterized in that** said reinforcing element (13) has a height (t) higher than 5% of the height (T) of the block (12).

6. Motorcycle tyre (100) according to any one of the previous claims 1 to 5, **characterized in that** said reinforcing element (13) has a height higher than 1 mm.

7. Motorcycle tyre (100) according to any one of the previous claims 1 to 6, **characterized in that** said reinforcing element (13) has a width 1 greater than 2 mm.

8. Motorcycle tyre (100) according to any one of the previous claims 1 to 7, **characterized in that** said reinforcing element (13) has a width 1 smaller than 8 mm.

9. Motorcycle tyre (100) according to any one of the previous claims 1 to 8, **characterized in that** said reinforcing element (13) in a plan view around said block (12) has segments of a constant width (1).

10. Motorcycle tyre (100) according to any one of the previous claims 1 to 9, **characterized in that** said reinforcing element (13) has a top surface (14) substantially parallel to the bottom surface (11).

11. Motorcycle tyre (100) according to any one of the previous claims 1 to 9, **characterized in that** said reinforcing element (13) has a width (1) decreasing while moving radially away from said bottom surface (11).

12. Motorcycle tyre (100) according to claim 1, **characterized in that** the reinforcing elements (12) joining adjacent blocks (13) are connected to one another so as to form a reinforcing grid extending over the entire tread band (8).

13. Motorcycle tyre (100) according to any one of the previous claims 1 to 12, **characterized in that** the blocks (12) have a cross section which is radially tapered towards the outside.

14. Motorcycle tyre (100) according to any one of the previous claims 1 to 13, **characterized in that** in a plan view the blocks (12) have a minimum circumferential dimension Wc and a minimum axial dimension Wl such that Wc/Wl is higher than or equal to 0.4.

15. Motorcycle tyre (100) according to any one of the previous claims 1 to 14, **characterized in that** in a plan view the blocks (12) have a minimum circumferential dimension Wc and a minimum axial dimension Wl such that Wc/Wl is lower than or equal to 2.

## Patentansprüche

1. Motorradreifen (100) mit einem Laufflächenring (8), umfassend:
- eine Vielzahl von unteren Oberflächenabschnitten (11);
- eine Vielzahl von Blöcken (12) mit einem jeweiligen Umfang, die voneinander so beabstandet sind, dass sie ein Laufflächenmuster mit einem Gesamtverhältnis der negativen und positiven Profilanteile von mehr als oder gleich 50 % definieren;
- eine Vielzahl von Verstärkungselementen (13), die sich radial von den unteren Oberflächenabschnitten (11) bis zu einer Höhe (t), die niedriger ist als jene der Blöcke (12), weg erstrecken, so dass sie sich mit den Blöcken (12) vereinigen und die Blöcke über zumindest 60 % von deren Umfang umgeben;
wobei die Abschnitte (11) der Vielzahl von unteren Oberflächenabschnitten eine Gesamterstreckung von mehr als 20 % einer Erstreckung des Laufflächenrings (8) aufweisen;
**dadurch gekennzeichnet, dass**
- die Verstärkungselemente (13) eine Höhe (t) aufweisen, die in dem Zentralbereich des Laufflächenrings höher ist als in den Seitenbereichen.

2. Motorradreifen (100) nach Anspruch 1, **dadurch gekennzeichnet, dass** die Blöcke der Vielzahl von Blöcken (12) eine Höhe T relativ zu der unteren Oberfläche von zumindest 7 mm aufweisen.

3. Motorradreifen (100) nach Anspruch 1, **dadurch gekennzeichnet, dass** das Verstärkungselement (13) den Block (12) über zumindest 90 % seines Umfangs umgibt.

4. Motorradreifen (100) nach Anspruch 1, **dadurch gekennzeichnet, dass** das Verstärkungselement (13) eine Höhe (t) von weniger als 60 % der Höhe (T) des Blocks (12) aufweist.

5. Motorradreifen (100) nach einem der vorhergehenden Ansprüche 1 bis 4, **dadurch gekennzeichnet, dass** das Verstärkungselement (13) eine Höhe (t) von mehr als 5 % der Höhe (T) des Blocks (12) aufweist.

6. Motorradreifen (100) nach einem der vorhergehenden Ansprüche 1 bis 5, **dadurch gekennzeichnet, dass** das Verstärkungselement (13) eine Höhe von mehr als 1 mm aufweist.

7. Motorradreifen (100) nach einem der vorhergehenden Ansprüche 1 bis 6, **dadurch gekennzeichnet, dass** das Verstärkungselement (13) eine Breite von mehr als 2 mm aufweist.

8. Motorradreifen (100) nach einem der vorhergehenden Ansprüche 1 bis 7, **dadurch gekennzeichnet, dass** das Verstärkungselement (13) eine Breite 1 von weniger als 8 mm aufweist.

9. Motorradreifen (100) nach einem der vorhergehenden Ansprüche 1 bis 8, **dadurch gekennzeichnet, dass** das Verstärkungselement (13) in einer Draufsicht um den Block (12) herum Segmente mit einer konstanten Breite (1) aufweist.

10. Motorradreifen (100) nach einem der vorhergehenden Ansprüche 1 bis 9, **dadurch gekennzeichnet, dass** das Verstärkungselement (13) eine obere Oberfläche (14) aufweist, die im Wesentlichen parallel zu der unteren Oberfläche (11) ist.

11. Motorradreifen (100) nach einem der vorhergehenden Ansprüche 1 bis 9, **dadurch gekennzeichnet, dass** das Verstärkungselement (13) eine Breite (1) aufweist, die radial von der unteren Oberfläche (11) weg verlaufend abnimmt.

12. Motorradreifen (100) nach Anspruch 1, **dadurch gekennzeichnet, dass** die Verstärkungselemente (12), die sich mit benachbarten Blöcken (13) vereinigen, miteinander verbunden sind, so dass sie ein Verstärkungsgitter bilden, das sich über den gesamten Laufflächenring (8) erstreckt.

13. Motorradreifen (100) nach einem der vorhergehenden Ansprüche 1 bis 12, **dadurch gekennzeichnet, dass** die Blöcke (12) einen Querschnitt aufweisen, der sich radial nach außen verjüngt.

14. Motorradreifen (100) nach einem der vorhergehenden Ansprüche 1 bis 13, **dadurch gekennzeichnet, dass** in einer Draufsicht die Blöcke (12) eine minimale Umfangsdimension Wc und eine minimale axiale Dimension W1 aufweisen, so dass Wc/W1 größer als oder gleich 0,4 ist.

15. Motorradreifen (100) nach einem der vorhergehenden Ansprüche 1 bis 14, **dadurch gekennzeichnet, dass** in einer Draufsicht die Blöcke (12) eine minimale Umfangsdimension Wc und eine minimale axiale Dimension W1 aufweisen, so dass Wc/W1 kleiner als oder gleich 2 ist.

## Revendications

1. Pneu de motocycle (100), ayant une bande de roulement (8) comprenant :
- une pluralité de parties de surface inférieure (11) ;
- une pluralité de blocs (12) ayant un périmètre respectif, espacés les uns des autres de façon à définir un motif de bande de roulement avec un rapport vide sur caoutchouc supérieur ou égal à 50% ;
- une pluralité d'éléments de renforcement (13) s'étendant radialement depuis lesdites parties de surface inférieure (11), de manière à assembler lesdits blocs (12), jusqu'à une hauteur (t) inférieure à celle desdits blocs (12) et entourant lesdits blocs sur au moins 60% de leur périmètre ;
les parties (11) de ladite pluralité de parties de surface inférieure ont une extension globale supérieure à 20% d'une extension de ladite bande de roulement (8) ;
**caractérisé en ce que**
- les éléments de renforcement (13) ont une hauteur (t) qui est plus grande dans la région centrale de la bande de roulement que dans les régions latérales.

2. Pneu de motocycle (100) selon la revendication 1, **caractérisé en ce que** les blocs de ladite pluralité de blocs (12) ont une hauteur T par rapport à la surface inférieure d'au moins 7 mm.

3. Pneu de motocycle (100) selon la revendication 1, **caractérisé en ce que** ledit élément de renforcement (13) entoure ledit bloc (12) sur au moins 90% de son périmètre.

4. Pneu de motocycle (100) selon la revendication 1, **caractérisé en ce que** ledit élément de renforcement (13) a une hauteur (t) inférieure à 60% de la hauteur (T) du bloc (12) .

5. Pneu de motocycle (100) selon l'une quelconque des revendications précédentes 1 à 4, **caractérisé en ce que** ledit élément de renforcement (13) a une hauteur (t) supérieure à 5% de la hauteur (T) du bloc (12).

6. Pneu de motocycle (100) selon l'une quelconque des revendications précédentes 1 à 5, **caractérisé en ce que** ledit élément de renforcement (13) a une hauteur supérieure à 1 mm.

7. Pneu de motocycle (100) selon l'une quelconque des revendications précédentes 1 à 6, **caractérisé en ce que** ledit élément de renforcement (13) a une largeur 1 supérieure à 2 mm.

8. Pneu de motocycle (100) selon l'une quelconque des revendications précédentes 1 à 7, **caractérisé en ce que** ledit élément de renforcement (13) a une largeur 1 inférieure à 8 mm.

9. Pneu de motocycle (100) selon l'une quelconque des revendications précédentes 1 à 8, **caractérisé en ce que** ledit élément de renforcement (13) dans une vue en plan autour dudit bloc (12) présente des segments d'une largeur constante (1).

10. Pneu de motocycle (100) selon l'une quelconque des revendications précédentes 1 à 9, **caractérisé en ce que** ledit élément de renforcement (13) présente une surface supérieure (14) sensiblement parallèle à la surface inférieure (11).

11. Pneu de motocycle (100) selon l'une quelconque des revendications précédentes 1 à 9, **caractérisé en ce que** ledit élément de renforcement (13) a une largeur (1) diminuant tout en s'éloignant radialement de ladite surface inférieure (11).

12. Pneu de motocycle (100) selon la revendication 1, **caractérisé en ce que** les éléments de renforcement (12) assemblant des blocs adjacents (12) sont reliés les uns aux autres de façon à former une grille de renforcement s'étendant sur toute la bande de roulement (8).

13. Pneu de motocycle (100) selon l'une quelconque des revendications précédentes 1 à 12, **caractérisé en ce que** les blocs (12) ont une section transversale qui est radialement effilée vers l'extérieur.

14. Pneu de motocycle (100) selon l'une quelconque des revendications précédentes 1 à 13, **caractérisé en ce que** dans une vue en plan, les blocs (12) ont une dimension circonférentielle minimale Wc et une dimension axiale minimale W1 telles que Wc/Wl est supérieur ou égal à 0,4.

15. Pneu de motocycle (100) selon l'une quelconque des revendications précédentes 1 à 14, **caractérisé en ce que** dans une vue en plan, les blocs (12) ont une dimension circonférentielle minimale Wc et une dimension axiale minimale W1 telles que Wc/Wl est inférieur ou égal à 2.
